# EUROPEAN PATENT SPECIFICATION

(11) **EP 4 187 828 B1**
(45) Date of publication and mention of the grant of the patent: **08.05.2024**
(21) Application number: 20948687.7
(22) Date of filing: 07.08.2020
(51) Int. Cl.: H04L 5/00, H04W 56/00, H04W 72/04

(54) **SSB DETERMINATION METHOD AND APPARATUS, AND DEVICE AND STORAGE MEDIUM**
SSB-BESTIMMUNGSVERFAHREN UND -VORRICHTUNG SOWIE VORRICHTUNG UND SPEICHERMEDIUM
PROCÉDÉ ET APPAREIL DE DÉTERMINATION DE SSB, DISPOSITIF ET SUPPORT DE STOCKAGE

(43) Date of publication of application: 31.05.2023
(73) Proprietor: GUANGDONG OPPO MOBILE TELECOMMUNICATIONS CORP., LTD., Dongguan, Guangdong 523860 (CN)
(72) Inventor: CHEN, Wenhong, Dongguan, Guangdong 523860 (CN); SHI, Zhihua, Dongguan, Guangdong 523860 (CN)
(74) Representative: Taor, Simon Edward William
(86) International application number: PCT/CN2020/107936
(87) International publication number: WO 2022/027636

(56) References cited:
- WO-A1-2020/146272
- CN-A- 110 800 346
- ERICSSON: "Lower-layer mobility enhancements", 3GPP DRAFT; R1-1911226 LOWER-LAYER MOBILITY ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chongqing, China; 20191014 - 20191020 4 October 2019 (2019-10-04), XP051789996, Retrieved from the Internet: URL:http://www.3gpp.org/ftp/tsg_ran/WG1_RL 1/TSGR1_98b/Docs/R1-1911226.zip [retrieved on 2019-10-04]
- ERICSSON: "L1 reporting on other cells", 3GPP DRAFT; R1-1802951 L1 REPORTING ON OTHER CELLS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20180226 - 20180302 17 February 2018 (2018-02-17), XP051398333, Retrieved from the Internet: URL:http://www.3gpp.org/ftp/tsg%5Fran/WG1% 5FRL1/TSGR1%5F92/Docs/ [retrieved on 2018-02-17]
- Huawei, HiSilicon, Samsung, Intel Cooperation: "[AT109bis-e][068][NR RIL] DiscMail4 (Huawei)", 3GPP Draft; R2-2004274, 3rd Generation Partnership Project (3GPP), Mobile Competence Centre ; 650, route des Lucioles ; F-06921 Sophia-Antipolis Cedex ; France, vol. RAN WG2, no. Electronic Meeting; 20200420 - 20200430, 7 May 2020 (2020-05-07), XP051881266, Mobile Competence Centre ; 650, route des Lucioles ; F-06921 Sophia-Antipolis Cedex ; France
- "3rd Generation Partnership Project; Technical Specification Group Radio Access Network; NR; Radio Resource Control (RRC) protocol specification (Release 16)", 3GPP Standard; Technical Specification; 3GPP TS 38.331, 3rd Generation Partnership Project (3GPP), Mobile Competence Centre ; 650, route des Lucioles ; F-06921 Sophia-Antipolis Cedex ; France, vol. RAN WG2, no. V16.1.0, 24 July 2020 (2020-07-24), pages 1-906, XP051925836, Mobile Competence Centre ; 650, route des Lucioles ; F-06921 Sophia-Antipolis Cedex ; France

## Description

### TECHNICAL FIELD

The present application relates to the field of mobile communications, and in particular, to a method, apparatus, device, and storage medium for determining an SSB.

### BACKGROUND

The mobile device may receive a Synchronization Signal Block (SSB) from a serving cell or a neighboring cell. If the beam of a signal is from the SSB of the neighboring cell, the beam information of the signal may contain all the information of the corresponding SSB, including information such as PCID, SSB index information, SSB resource configuration information, and SSB power configuration information, and the terminal detects the SSB based on the information of the SBB. If beams of a plurality of signals all come from the SSBs of the neighboring cell, the foregoing information corresponding to the SSB needs to be configured for each signal. However, in the downlink multiple Transmission Reception Point (TRP) cooperative transmission, since there is only one neighboring cell participating in the cooperation, the above-mentioned method needs to repeatedly configure the information of this neighboring cell, resulting in wasting a lot of signaling overhead. 3GPP draft R1-1911226 discloses that since this RSRP reporting was designed for beam management, it is implicitly assumed that the UE can only be configured to report RSRP for SSBs within the serving cell. However, the additional effort to also include the possibility to report measurements on configured SSBs in configured non-serving cells is rather minor. The only thing that is required is to replace SSB-index with a quantity which includes also a PCI. 3GPP draft R1-1802951 also discloses that since this RSRP reporting was designed for beam management, it is implicitly assumed that the UE can only be configured to report RSRP for SSBs within the serving cell. However, the additional effort to also include the possibility to report measurements on configured SSBs in configured non-serving cells is rather minor. The only thing that is required is to replace SSB-index with a quantity which includes also a PCI.

### SUMMARY

The present invention is defined in the independent claims. The embodiments of the present application provide a method, apparatus, device, and storage medium for determining an SSB, which can determine the parameter of the first signal or perform CSI reporting without repeatedly configuring the information of the neighboring cell, further reducing signaling overhead. Further preferred embodiments may be found in the dependent claims.

The technical solutions provided by the embodiments of the present application include at least the following beneficial effects.

The cell indication information of the first SSB can indicate whether the first SSB belongs to a serving cell or a neighboring cell, thereby the signaling overhead is low, in addition, the first SSB can be determined according to the first index information, and then the parameter information of the first signal can be determined or CSI reporting can be performed based on the first SSB, without repeatedly configuring the information of the neighboring cell, which further reduces signaling overhead.

### BRIEF DESCRIPTION OF THE DRAWINGS

In order to illustrate the technical solutions in the embodiments of the present application more clearly, the following briefly introduces the drawings that are used in the description of the embodiments. Obviously, the drawings in the following description are only some embodiments of the present application. For those of ordinary skill in the art, other drawings can also be obtained from these drawings without creative effort.
FIG. 1 shows a schematic diagram of a beam management process provided by an example of the present application;
FIG. 2 shows a schematic diagram of a downlink non-coherent transmission provided by an example of the present application;
FIG. 3 shows a schematic diagram of an uplink non-coherent transmission provided by an example of the present application;
FIG. 4 shows a block diagram of a communication system provided by an example of the present application;
FIG. 5 shows a flowchart of a method for determining an SSB provided by an embodiment of the present application:
FIG. 6 shows a flowchart of a method for determining an SSB provided by an example of the present application;
FIG. 7 shows a flowchart of a method for determining an SSB provided by an example of the present application;
FIG. 8 shows a flowchart of a method for determining an SSB provided by an example of the present application;
FIG. 9 shows a flowchart of a method for determining an SSB provided by an example of the present application;
FIG. 10 shows a flowchart of a method for determining an SSB provided by an example of the present application;
FIG. 11 shows a flowchart of a method for determining an SSB provided by an embodiment of the present application:
FIG. 12 shows a block diagram of an apparatus for determining an SSB provided by an example of the present application;
FIG. 13 shows a block diagram of an apparatus for determining an SSB provided by an example of the present application;
FIG. 14 shows a block diagram of an apparatus for determining an SSB provided by an example of the present application;
FIG. 15 shows a block diagram of an apparatus for determining an SSB provided by an example of the present application;
FIG. 16 shows a schematic structural diagram of a communication device provided by an embodiment of the present application.

### DETAILED DESCRIPTION

In order to make the objectives, technical solutions and advantages of the present application clearer, the embodiments of the present application will be further described in detail below with reference to the accompanying drawings.

It is understood that the terms "first", "second" and the like used in this application may be used herein to describe various concepts, but these concepts are not limited by these terms unless otherwise specified. These terms are only used to distinguish one concept from another.

First, the terms involved in the embodiments of the present application are briefly introduced:

Downlink beam management: in New Radio (NR), the network device may transmit Physical Downlink Shared Channel (PDSCH) using analog beams. Before performing analog beamforming, the network device needs to determine the beam to be used through the downlink beam management process. The downlink beam management may be performed based on Channel State Information Reference signal (CSI-RS) or SSB.

In a possible implementation manner, the network device sends a plurality of SSBs or a plurality of CSI-RS resources for beam management, and the terminal performs measurements based on these SSBs or CSI-RS resources, selects a preset number of SSBs or CSI-RS resources with the best reception quality, and reports the preset number of SSB indexes or CSI-RS resource indexes and the corresponding Reference Signal Receiving Power (RSRP) to the network device.

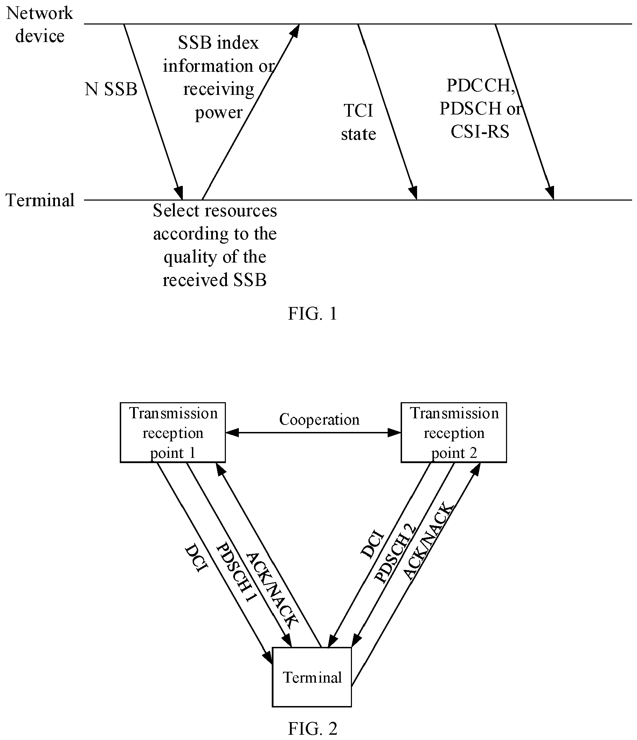

The SSB is an SSB of the serving cell, and the terminal needs to measure and report the SSB of the serving cell based on the SSB index set configured by the network device. The network device obtains one optimal SSB or CSI-RS resource according to the report of the terminal, determines the used sending beam as the sending beam used for downlink transmission, and uses the sending beam to transmit the downlink control channel or data channel. Before transmitting the downlink control channel or data channel, the network device may indicate the corresponding Quasi Co location (QCL) reference signal to the terminal through the Transmission Configuration indication (TCI) state, so that the terminal may receive the corresponding downlink control channel or data channel using the receiving beam used for receiving the QCL reference signal previously. The following takes SSB as an example to describe the downlink beam management. The SSB-based beam management process is shown in FIG. 1. The network device sends N SSBs to the terminal. The terminal selects resources according to the quality of the received SSBs, and sends SSB index information or receiving power to the network device. The network device sends the TCI state to the terminal, and then sends Physical Downlink Control Channel (PDCCH), PDSCH or CSI-RS through the sending beam of the QCL corresponding to the TCI state.

QCL indication of downlink transmission: in the NR system, the network device may configure the corresponding TCI state for each downlink reference signal or downlink channel, which is used for indicating the QCL reference signal corresponding to the target downlink reference signal or the target downlink channel, so that the terminal can receive the target downlink reference signal or the target downlink channel based on this QCL reference signal.

Among them, one TCI state may contain the following configurations:
an TCI state flag, used for indicating one TCI state;
QCL information 1;
QCL information 2.

Among them, one QCL information includes:
QCL type configuration information, which may be any of QCL type A, QCL typeB, QCL typeC or QCL typeD;
QCL reference signal configuration information, including an identity of a cell where the reference signal is located, a Band Width Part (BWP) identity, and an identity of the reference signal. The identifier of the reference signal may be a CSI-RS resource identifier or an SSB index.

Among them, in QCL information 1 and QCL information 2, the QCL type of at least one piece of QCL information should be one of typeA, typeB, and typeC, and the QCL type of the other QCL information should be QCL type D.

Among them, the definitions of different QCL type configurations are as follows:
'QCL-TypeA": {Doppler shift, Doppler spread, average delay, delay spread};
"QCL-TypeB": {Doppler shift, Doppler spread};
"QCL-TypeC": {Doppler shift, average delay};
"QCL-TypeD": {spatial receiving parameter}.

If the network device configures the QCL reference signal of the target downlink signal as SSB or CSI-RS resource through the TCI state, and the QCL type is configured as typeA, typeB or typeC, the terminal may assume that the target downlink signal is the same as the target large-scale parameter of the SSB or CSI-RS resource, so the same receiving parameter is used for reception, and the target large-scale parameter is determined by the QCL type configuration. In addition, if the network device configures the QCL reference signal of the target downlink signal to be SSB or CSI-RS resource through the TCI state, and the QCL type is configured to typeD, the terminal may use the same receiving beam as the beam for receiving the SSB or CSI-RS resource to receive the target downlink signal, that is, at this time, the terminal may determine the receiving beam of the target downlink signal according to the TCI state.

The target downlink signal and the corresponding QCL reference signal are sent by the same TRP or the same panel or the same beam in the network device. If the transmission TRPs, or transmission panels or sending beams of the two downlink signals are different, the network device may configure different TCI states.

For the downlink control channel, the TCI state may be indicated by means of RRC signaling or RRC signaling and MAC signaling. For the downlink data channel, the available TCI state set is indicated by RRC signaling, and some of the TCI states are activated by MAC layer signaling. One or two TCIs are indicated from the activated TCI states by the TCI state indication field in the DCI, and the one or two TCI states are used for DCI to schedule PDSCH. For CSI-RS, the QCL reference signal of the CSI-RS may be directly configured through high layer signaling, and the signal may be one SSB or another CSI-RS.

Uplink beam management: in NR, for each PUCCH resource, multiple pieces of spatial relation information (PUCCH-spatialrelationinfo) are configured in RRC signaling, and then the currently used PUCCH-spatialrelationinfo is indicated by MAC layer signaling therefrom. Each PUCCH-spatialrelationinfo includes one reference signal for determining the sending beam of the PUCCH, and may also include a power control parameter corresponding to the PUCCH.

The reference signal may be SRS or CSI-RS or SSB of the serving cell. If the reference signal is CSI-RS or SSB, the terminal uses the receiving beam of the CSI-RS or SSB as the sending beam of the PUCCH; if the reference signal is SRS, the terminal uses the sending beam of the SRS as the sending beam of the PUCCH.

For each SRS resource, corresponding spatial relation information may also be configured through RRC signaling, which includes one reference signal used for determining the sending beam of the SRS.

The reference signal may be SRS or CSI-RS or SSB of the serving cell. If the reference signal is CSI-RS or SSB, the terminal uses the receiving beam of the CSI-RS or SSB as the sending beam of the PUCCH; if the reference signal is SRS, the terminal uses the sending beam of the SRS as the sending beam of the PUCCH.

If the SRS resource is an SRS resource for positioning, the SSB in the spatial relation information may be the SSB from a neighboring cell. As shown below, in the spatial relation information of the SRS, the reference signal used for determining the sending beam of the SRS may be a signal from a serving cell, or may be an SSB from a neighboring cell, or may be a downlink positioning reference signal. When the reference signal is the SSB of a neighboring cell, the network device needs to further indicate the PCID, SSB index and resource information of the SSB in the spatial relation information, and the terminal may detect the SSB of the neighboring cell according to these configurations. The information needs to be included in the spatial relation information of each SRS resource.

Downlink non-coherent transmission: for example, as shown in FIG. 2, in downlink non-coherent transmission, multiple TRPs may use different control channels on the same physical resource to independently schedule multiple PDSCH transmissions of one terminal, or may use the same one control channel to schedule the transmission of different TRPs. For downlink transmission scheduled with multiple PDCCHs, the scheduled PDSCHs may be transmitted in the same slot or in different slots. The terminal needs to support simultaneous reception of PDCCH and PDSCH from different TRPs. The two TRPs may be different TRPs of the same cell, or may be two different physical cells.

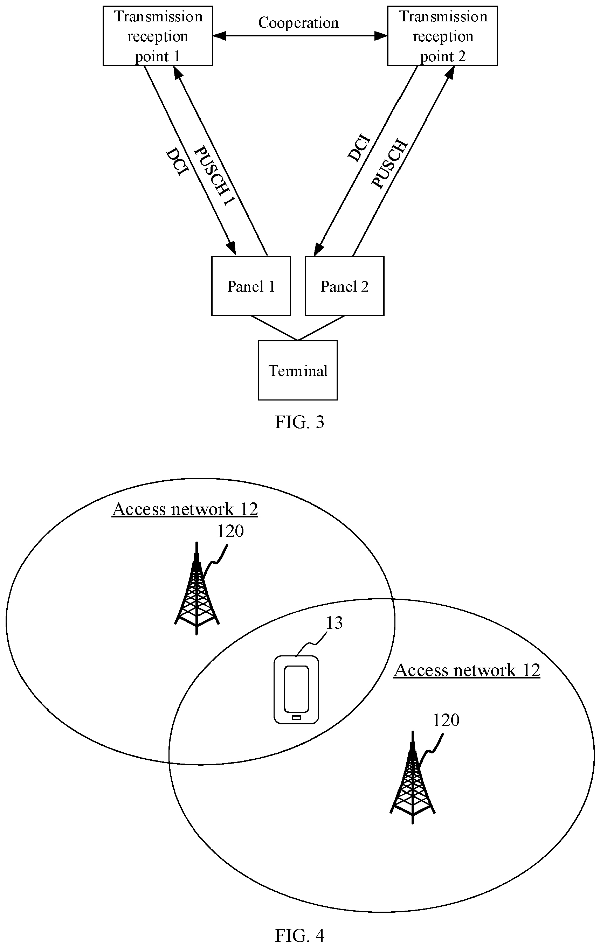

Uplink non-coherent transmission: for example, as shown in FIG. 3, in uplink non-coherent transmission, different TRPs may also independently schedule PUSCH transmission of the same terminal. Different PUSCH transmissions may be configured with independent transmission parameters, such as beams, precoding matrices, and layers. The scheduled PUSCH transmissions may be transmitted in the same slot or in different slots. The PUSCHs transmitted by different TRPs may be scheduled based on multiple DCIs, and these DCIs may be carried by different co-resets. The two cooperating TRPs may also be two different physical cells.

FIG. 4 shows a block diagram of a communication system provided by an exemplary embodiment of the present application. The communication system may include: an access network 12 and a terminal 13.

The access network 12 includes several network devices 120. The network device 120 may be a base station, which is an apparatus deployed in an access network to provide a wireless communication function for a terminal. The base station may include various forms of macro base station, micro base station, relay station, access point and so on. In systems using different radio access technologies, the names of devices with base station functions may be different. For example, in LTE systems, they are called eNodeBs or eNBs; and in 5G NR-U systems, they are called gNodeBs or gNBs. As communication technology evolves, the description of "base station" may change. For convenience, in the embodiments of the present application, the above-mentioned apparatuses for providing the terminal 13 with a wireless communication function are collectively referred to as access network device.

The terminal 13 may include various handheld devices, vehicle-mounted devices, wearable devices, computing devices with wireless communication functions or other processing devices connected to the wireless modem, as well as various forms of user equipment, mobile stations (MS), terminal (terminal device) and so on. For the convenience of description, the devices mentioned above are collectively referred to as terminals. The access network device 120 and the terminal 13 communicate with each other through a certain air interface technology, such as a Uu interface.

The technical solutions of the embodiments of the present application may be applied to various communication systems, for example: a Global System of Mobile communication (GSM) system, a Code Division Multiple Access (CDMA) system, a Wideband Code Division Multiple Access (WCDMA) system, General Packet Radio Service (GPRS), a Long Term Evolution (LTE) system, an LTE Frequency Division Duplex (FDD) system, an LTE Time Division Duplex (TDD) system, an Advanced long term evolution (LTE-A) system, a New Radio (NR) system, an evolution system of NR system, an LTE-based access to unlicensed spectrum (LTE-U) system, an NR-U system, a Universal Mobile Telecommunication System (UMTS), a Worldwide Interoperability for Microwave Access (WiMAX) communication system, Wireless Local Area Networks (WLAN), Wireless Fidelity (WiFi), a next-generation communication system or other communication systems, etc.

Generally speaking, traditional communication systems support a limited number of connections, which is easy to be implemented. However, with the development of communication technology, the mobile communication systems will not only support traditional communication, but also support, for example, Device to Device (D2D) communication, Machine to Machine (M2M) communication, Machine Type Communication (MTC), Vehicle to Vehicle (V2V) communication and Vehicle to Everything (V2X) system, etc. The embodiments of the present application may also be applied to these communication systems.

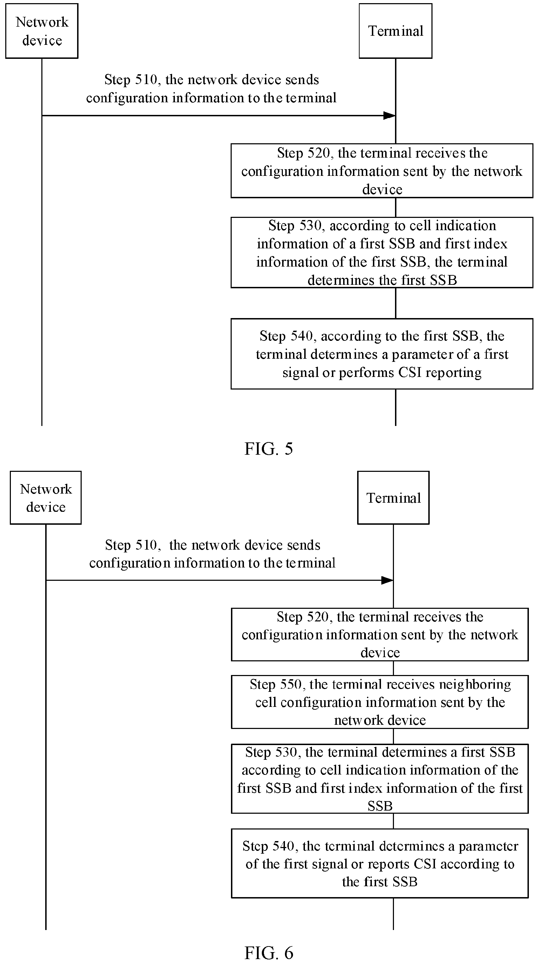

FIG. 5 shows a flowchart of a method for determining an SSB provided by an exemplary embodiment of the present application, which is applied to the terminal and network device shown in FIG. 4, and the method includes at least part of the following contents.

**In step 510: the network device sends configuration information to the terminal.**

The configuration information includes cell indication information of a first SSB and first index information of the first SSB, and the cell indication information is used for indicating whether the first SSB is an SSB of a serving cell or an SSB of a neighboring cell.

In the embodiments of the present application, the network device can indicate to the terminal whether the first SSB belongs to a serving cell or a neighboring cell, and the network device may be a network device corresponding to the serving cell or a network device corresponding to the neighboring cell.

Optionally, the cell indication information is used for indicating whether the first SSB belongs to a serving cell or a neighboring cell.

The cell indication information includes a bit, and the network device can indicate the cell to which the first SSB belongs by using the bit in the cell indication information.

The first index information is used for indicating the SSB index of the first SSB. The terminal can determine the first SSB according to the first index information.

Optionally, the first SSB is one SSB corresponding to the first index information; or, the first SSB is one SSB set used for CSI measurement corresponding to the first index information. At this time, the first index information may include SSB indexes of multiple SSBs. For example, the cell indication information may be separately configured for each SSB, or the same cell indication information may be configured for multiple SSBs in one SSB set.

In the embodiments of the present application, indicating that the first SSB belongs to a serving cell or a neighboring cell by using a bit in the cell indication information includes any of the following situations:
(1) The cell indication information includes 1 bit. If the cell indication information is a first preset value, the first SSB is the SSB of the serving cell. If the cell indication information is a second preset value, the first SSB is the SSB of the neighboring cell.
   The first preset value and the second preset value are configured by the network device, or determined through negotiation between the network device and the terminal, or configured in other ways. Moreover, the first preset value and the second preset value are different. For example, if the first preset value is 1, the second preset value is 0, or if the first preset value is 0 and the second preset value is 1.
(2) If the cell indication information is empty, the first SSB is a serving cell, and if the cell indication information is not empty, the first SSB is a neighboring cell.
(3) If the cell indication information is empty, the first SSB is a neighboring cell, and if the cell indication information is not empty, the first SSB is a serving cell.

The above situation (2) is opposite to the situation (3), in the situation (2), the cell indication information being empty is used for indicating that the first SSB is the SSB in the serving cell, and in the situation (3), the cell indication information being empty is used for indicating that the first SSB is the SSB in the neighboring cell. Similarly, in the situation (2), the cell indication information being not empty is used for indicating that the first SSB is an SSB in a neighboring cell, and in the situation (3), the cell indication information being not empty is used for indicating that the first SSB is an SSB in the serving cell.

Optionally, the configuration information further includes:
first configuration information, where the first configuration information is configuration information of the TCI state of the first signal;
second configuration information, where the second configuration information is configuration information of the path loss measurement reference signal of the first signal;
third configuration information, where the third configuration information is spatial information of the first signal, where the spatial information includes a reference signal and/or a power control parameter of a sending beam of an uplink signal.
fourth configuration information, where the fourth configuration information is configuration information of the SSB set used for channel state information (CSI) measurement.

The first configuration information, the second configuration information, the third configuration information, and the fourth configuration information are not described temporarily in the embodiment of the present application, and will be described in detail in subsequent embodiments.

**In step 520: the terminal receives the configuration information sent by the network device.**

**In step 530: the terminal determines the first SSB according to the cell indication information of the first SSB and the first index information of the first SSB.**

After receiving the cell indication information of the first SSB and the first index information of the first SSB, the terminal can determine the first SSB.

If the terminal determines that the first SSB belongs to the serving cell according to the cell indication information, the terminal determines the first SSB corresponding to the first index information in the serving cell. For example, if the first index information includes one SSB index, the terminal can determine one SSB in the serving cell according to the SSB index. Or, if the first index information includes multiple SSB indexes, the terminal can determine one SSB in the serving cell according to each SSB index, and can determine multiple SSBs in the serving cell according to the multiple SSB indexes.

If the terminal determines that the first SSB belongs to a neighboring cell according to the cell indication information, the first SSB corresponding to the first index information is determined in the neighboring cell according to the first index information. For example, if the first index information includes one SSB index, the terminal can determine one SSB in the neighboring cell according to the SSB index. Or, if the first index information includes multiple SSB indexes, the terminal can determine one SSB in the neighboring cell according to each SSB index, and can determine multiple SSBs in the neighboring cell according to the multiple SSB indexes.

Optionally, before step 530 is performed, referring to FIG. 6, the method further includes step 550: the terminal receiving neighboring cell configuration information sent by the network device. The neighboring cell configuration information is used for indicating the position of the SSB in the neighboring cell. The terminal can determine the SSB in the neighboring cell according to the neighboring cell configuration information.

Correspondingly, if the cell indication information indicates that the first SSB is the SSB of the neighboring cell, the SSB of the neighboring cell is determined according to the received neighboring cell configuration information, and the first SSB is determined from the SSBs of the neighboring cell according to the first index information.

Optionally, the neighboring cell configuration information includes at least one of the PCID, frequency domain resource information, time domain resource information, subcarrier interval information, and transmit power information of the SSB of the neighboring cell.

The PCID of the SSB of the neighboring cell is used for indicating the physical cell ID carried in the SSB. The frequency domain resource information is used for indicating the frequency domain resource corresponding to each SSB. The time domain resource information is used for indicating the time domain resource corresponding to each SSB. The subcarrier spacing information is used for indicating the subcarrier spacing used for SSB transmission. The transmit power information is used for indicating the power used when the network device sends the SSB.

It should be noted that the embodiments of the present application only take the determination of the SSB of the neighboring cell by the terminal according to the neighboring cell configuration information as an example for description. In another embodiment, the terminal may also determine the SSB of the serving cell according to the serving cell configuration information. Moreover, the serving cell configuration information is similar to the neighboring cell configuration information, and details are not described herein again.

Alternatively, in another embodiment, the terminal may also detect the SSB of the serving cell during the random access process of the serving cell, and can determine the SSB of the serving cell without using the serving cell configuration information, which reduces the amount of information and further reduces the signaling overhead.

Optionally, the neighboring cell configuration information is a common configuration parameter within a carrier or a BWP.

In one embodiment, when the cell indication information indicates that the first SSB is the SSB of a neighboring cell, the physical resource of the first SSB needs to be subject to some constraints. For example, the physical resource of the first SSB does not overlap with the physical resource of a second signal.

The second signal is a downlink signal configured or scheduled by the network device. The physical resource is used for indicating a resource position, for example, the physical resource includes a time domain resource and a frequency domain resource.

If the physical resource of the first SSB and the physical resource of the second signal do not overlap, the terminal can receive the first SSB. If the physical resource of the first SSB and the physical resource of the second signal overlap, interference occurs between the first SSB and the second signal, and the terminal cannot receive the first SSB.

**In step 540: the terminal determines a parameter of the first signal or reports an CSI according to the first SSB.**

The first signal may be an uplink signal, or may be a downlink signal. After the terminal determines the first SSB, the terminal can determine the parameter of the first signal according to the first SSB. Alternatively, the terminal can also report the CSI based on the first SSB.

Optionally, the cell indication information and the first index information corresponding to the first SSB are included in the configuration information of the first signal, then after the first SSB is determined through the configuration information of the first signal, the parameter of the first signal is determined according to the first SSB. Alternatively, the terminal can also report the CSI based on the first SSB.

Optionally, determining the parameter of the first signal by the terminal according to the first SSB includes: the terminal determining a large-scale parameter, a beam or a transmit power of the first signal according to the first SSB.

The cell indication information and the first index information corresponding to the first SSB are included in different configuration information of the first signal, and the determined parameters of the first signal are also different.

Optionally, determining the large-scale parameter, beam or transmit power of the first signal according to the first SSB includes any of the following.
(1) If the cell indication information and the first index information are included in the first configuration information of the TCI state of the first signal, the large-scale parameter used for receiving the first SSB is used as the large-scale parameter for receiving the first signal; or, the receiving beam used for receiving the first SSB is used as the sending beam of the first signal; or, the receiving beam used for receiving the first SSB is used as the receiving beam of the first signal.

The first signal is an uplink signal. For example, the first signal is PUCCH, PUSCH or SRS.

Alternatively, the first information is a downlink signal. For example, the first signal is CSI-RS, Tracking Reference Signal (TRS, time-frequency tracking reference signal), PDCCH or PDSCH.

(2) If the cell indication information and the first index information are included in the second configuration information of the path loss measurement reference signal of the first signal, the path loss estimation value is determined based on the first SSB, and the transmit power of the first signal is determined according to the path loss estimation value.

The first signal is an uplink signal, for example, the first signal is PUCCH, PUSCH or SRS.

(3) If the cell indication information and the first index information are included in the third configuration information of the spatial information of the first signal, the receiving beam used for receiving the first SSB is used as the sending beam of the first signal.

The first signal is an uplink signal, and the first signal may be PUCCH, PUSCH or SRS.

(4) If the cell indication information and the first index information are included in the fourth configuration information of the SSB set used for CSI measurement, CSI measurement is performed based on the first SSB, second index information and channel quality included in the CSI information are determined, and the CSI is reported.

The second index information is index information of the second SSB in the SSB set, and the channel quality information is RSRP information or Signal to Interference plus Noise Ratio (SINR) information corresponding to the second SSB.

In the method provided by the embodiments of the present application, whether the first SSB belongs to a serving cell or a neighboring cell can be indicated through the cell indication information of the first SSB, the signaling overhead is low, and the first SSB can also be determined according to the first index information, further, based on the first SSB, parameter information of the first signal is determined or CSI reporting is performed, and there is no need to repeatedly configure the information of the neighboring cell, which further reduces signaling overhead.

In addition, the bit of the cell indication information of the first SSB is only 1 bit, or whether the cell indication information is empty or not indicates whether the first SSB belongs to a serving cell or a neighboring cell, which further reduces signaling overhead.

In addition, the terminal can determine the first SSB from the SSBs of the neighboring cell according to the neighboring cell configuration information, and can uniformly configure the SSBs in the neighboring cell through the neighboring cell configuration information, without the need of configuring each SSB separately, which reduces signaling overhead.

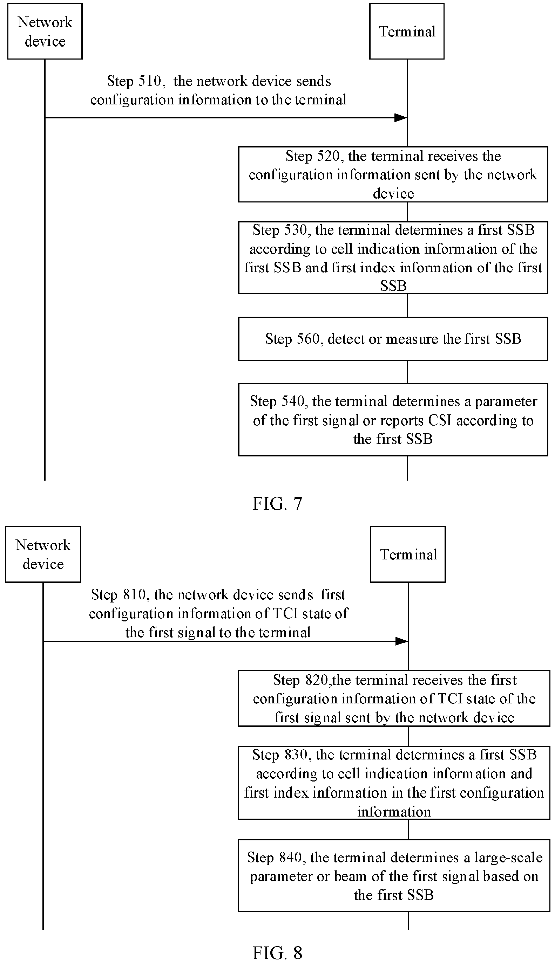

On the basis of the embodiment shown in FIG. 5, before step 540, referring to FIG. 7, the method further includes step 560.

In step 560: the first SSB is detected or measured.

The detecting the first SSB includes detecting the first SSB on a resource corresponding to the first SSB using a certain receiving beam. The measuring the first SSB includes measuring RSRP or SINR corresponding to the first SSB.

In the embodiments of the present application, if the first SSB is the SSB of a neighboring cell, when detecting or measuring the first SSB, the following two situations are included.

The first type: if the first SSB is an SSB of a neighboring cell, and the physical resource of the first SSB does not overlap with the physical resource of the second signal, the first SSB is detected or measured.

The second type: if the first SSB is an SSB of a neighboring cell, and the physical resource of the first SSB overlaps with the physical resource of the second signal, the first SSB is detected or measured by using the receiving beam of the second signal.

Alternatively, if the first SSB is an SSB of a neighboring cell, and the physical resource of the first SSB overlaps with the physical resource of the second signal, the terminal may not detect or measure the first SSB.

The second signal is a downlink signal configured or scheduled by the network device. For example, the second signal is TRS, CSI-RS, DMRS or PDSCH.

In addition, if the network device sends the first SSB to the terminal, the terminal can detect or measure the first SSB.

In the embodiment of FIG. 5, description is given about determining the first SSB by combining the cell indication information and the first index information included in the configuration information sent by the network device to the terminal, and then based on the first SSB, determining the large-scale parameter, beam or transmit power of the first signal; or, performing the CSI reporting based on the first SSB. In the following, the process in the embodiment of FIG. 5 is described in detail by using an example in which the configuration information includes the configuration information of the transmission configuration indication (TCI) state of the first signal, the configuration information of the path loss measurement reference signal of the first signal, the spatial relation information of the first signal, and the configuration information of the SSB set for the channel state information (CSI) measurement.

FIG. 8 is a flowchart of a method for determining an SSB provided by an exemplary embodiment of the present application. Referring to FIG. 3, the method includes the following steps.

In step 810: the network device sends first configuration information of the TCI state of the first signal to the terminal.

The TCI state is used for indicating a QCL reference signal corresponding to the first signal, and then the terminal can receive the first signal based on the QCL reference signal.

In an implementation manner, the first signal is an uplink signal, for example, the first signal may be PUCCH, PUSCH or SRS.

In another implementation manner, the first signal may also be a downlink signal, for example, the first signal may be CSI-RS, TRS, PDCCH or PDSCH.

Optionally, the network device sends the first configuration information of the TCI state of the first signal to the terminal through RRC signaling.

Optionally, the RRC signaling used for configuring the first configuration information may be:

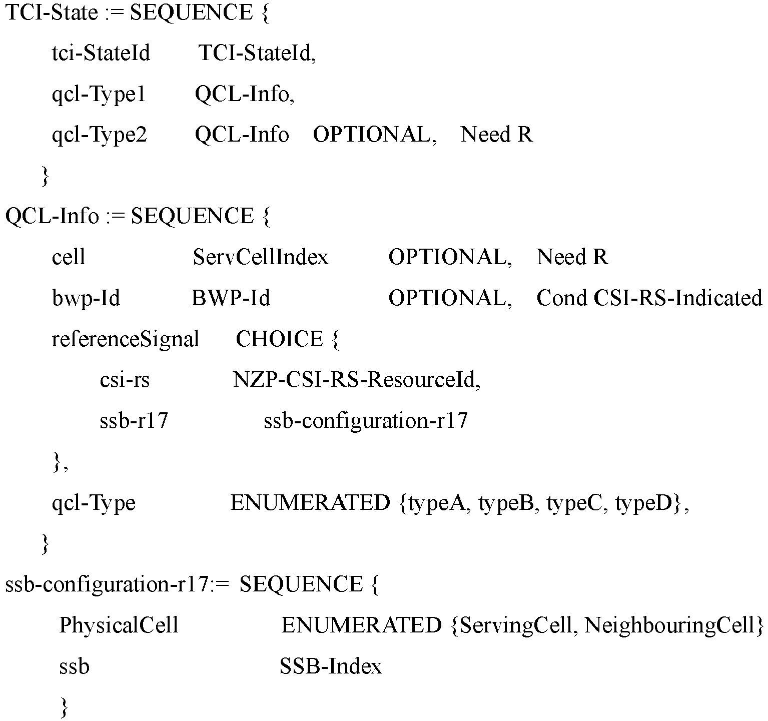

Among them, ssb-configuration-r17 is used for configuring a parameter of the first SSB, including cell indication information PhysicalCell and first index information SSB-Index.

In step 820: the terminal receives the first configuration information of the TCI state of the first signal sent by the network device.

In step 830: the terminal determines the first SSB according to the cell indication information and the first index information in the first configuration information.

Optionally, if the cell indication information indicates that the first SSB is the SSB of the neighboring cell, the terminal determines the SSB of the neighboring cell according to the neighboring cell configuration information, and then determines the first SSB from the SSBs of the neighboring cell according to the first index information.

The neighboring cell configuration information is sent to the terminal through RRC signaling. And the neighboring cell configuration information, the cell indication information, and the first index information are configured through different information fields.

Optionally, the RRC signaling used for configuring the neighboring cell configuration information may be:

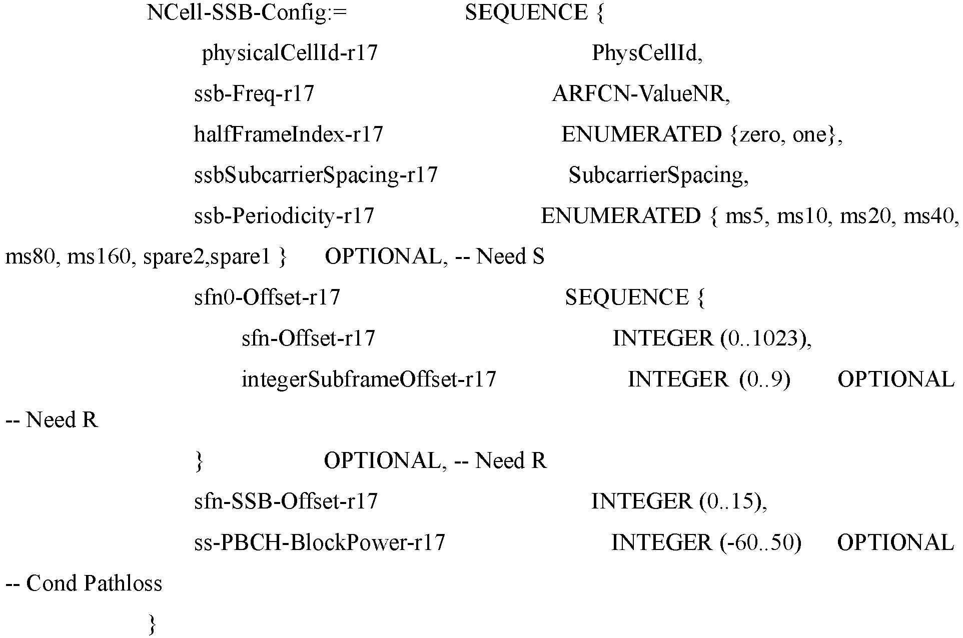

Among them, physicalCellId-r17 is used for configuring the PCID of the SSB of the neighboring cell, ssb-Freq-r17 is used for configuring the frequency domain resource of the SSB of the neighboring cell, halfFrameIndex-r17, ssb-Periodicity-r17, sfn0-Offset-r17 and sfn-SSB-Offset-r17 are used for configuring the time domain resource of the SSB of the neighboring cell, ssbSubcarrierSpacing-r17 is used for configuring the subcarrier spacing of the SSB of the neighboring cell, and ss-PBCH-BlockPower-r17 is used for configuring the transmit power of the SSB of the neighboring cell.

In a possible implementation manner, the terminal determines the physical resources occupied by the SSBs of the neighboring cell according to the neighboring cell configuration information, and then determines the physical resource of the first SSB from the physical resources of the SSBs of the neighboring cell according to the first index information.

In another possible implementation manner, the terminal determines at least one of the physical resource, PCID, or transmit power of the first SSB according to the neighboring cell configuration information.

Optionally, if the cell indication information indicates that the first SSB is the SSB of the serving cell, the terminal determines the first SSB from the SSBs of the serving cell according to the first index information.

The terminal may detect the SSB of the serving cell during the random access process of the serving cell.

Optionally, after determining the first SSB, the terminal may also detect or measure the first SSB.

In step 840: the terminal determines a large-scale parameter or beam of the first signal based on the first SSB.

The terminal may determine the large-scale parameter or beam of the first signal based on the large-scale parameter or beam of the first SSB.

Optionally, if the first information is a downlink signal, the terminal uses the large-scale parameter used for receiving the first SSB as the large-scale parameter for receiving the first signal.

The large-scale parameter includes at least one of delay spread, Doppler spread, Doppler frequency shift, average gain, and average delay.

Optionally, if the first signal is a downlink signal, the terminal uses the receiving beam used for receiving the first SSB as the receiving beam of the first signal.

Optionally, if the first signal is an uplink signal, the terminal uses the receiving beam used for receiving the first SSB as the sending beam of the first signal.

In the embodiments of the present application, the sending beam may also be referred to as a Spatial domain transmission filter or Spatial domain filter for transmission; the receiving beam may also be referred to as a Spatial domain reception filter or Spatial domain filter for reception.

In the method provided by the embodiments of the present application, whether the first SSB belongs to a serving cell or a neighboring cell can be indicated by the cell indication information in the configuration information of the TCI state of the first signal, the signaling overhead is low, and the first SSB can be determined according to the first index information without the need to repeatedly configure the information of the neighboring cell, and the large-scale parameter or the receiving beam of the first signal can be determined based on the first SSB, which further reduces signaling overhead.

In addition, the bit of the cell indication information of the first SSB is only 1 bit, or whether the cell indication information is empty or not indicates whether the first SSB belongs to a serving cell or a neighboring cell, which further reduces signaling overhead.

In addition, the terminal can determine the first SSB from the SSBs of the neighboring cell according to the neighboring cell configuration information, and can uniformly configure the SSBs in the neighboring cell through the neighboring cell configuration information without the need to configure each SSB separately, which reduces signaling overhead.

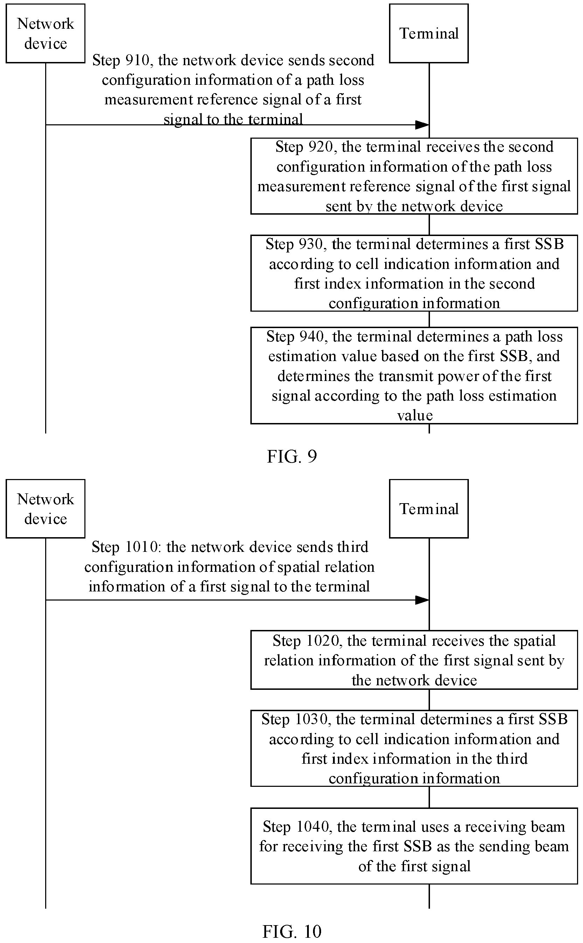

FIG. 9 shows a flowchart of a method for determining an SSB provided by an exemplary embodiment of the present application. Referring to FIG. 9, the method includes the following steps.

In step 910: the network device sends the second configuration information of the path loss measurement reference signal of the first signal to the terminal.

The path loss measurement reference signal is used to measure the path loss value.

Optionally, the network device sends the second configuration information of the path loss measurement reference signal of the first signal to the terminal through RRC signaling.

Optionally, the first signal is an uplink signal, for example, the first signal may be PUCCH, PUSCH or SRS.

Optionally, the RRC signaling used to configure the second configuration information may be:

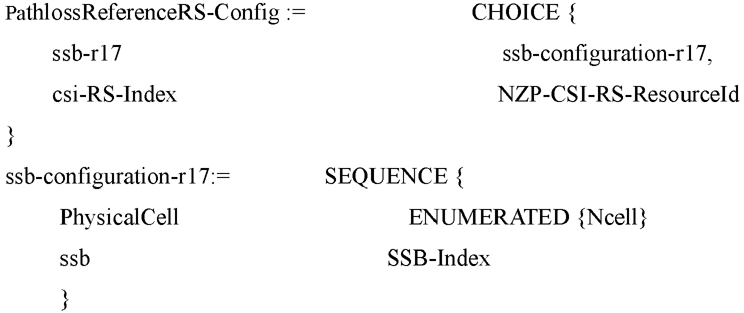

Among them, ssb-configuration-r17 is used to configure a parameter of the first SSB, including cell indication information PhysicalCell and first index information SSB-Index of the first SSB. When the PhysicalCell is not configured, it indicates that the first SSB is the SSB of the serving cell; when the PhysicalCell is configured, it indicates that the first SSB is the SSB of the neighboring cell. SSB-Index is the first index information.

In step 920: the terminal receives the second configuration information of the path loss measurement reference signal of the first signal sent by the network device.

In step 930: the terminal determines the first SSB according to the cell indication information and the first index information in the second configuration information.

The step 930 is similar to the above-mentioned step 530, and details are not repeated here.

Optionally, after determining the first SSB, the terminal may also detect or measure the first SSB.

In step 940: the terminal determines a path loss estimation value based on the first SSB, and determines the transmit power of the first signal according to the path loss estimation value.

Optionally, if the cell indication information indicates that the first SSB is the SSB of the neighboring cell, the terminal determines the physical resource and transmit power of the SSB of the neighboring cell according to the neighboring cell configuration information, determines the physical resource and transmit power of the first SSB from the physical resources of the SSBs of the neighboring cell according to the first index information, then measures the RSRP of the first SSB according to the physical resource of the first SSB, determines the path loss estimation value according to the transmit power and RSRP of the first SSB, and then determines the transmit power of the first signal according to the determined path loss estimation value.

In the method provided by the embodiments of the present application, the cell indication information in the configuration information of the path loss measurement reference signal of the first signal can indicate whether the first SSB belongs to a serving cell or a neighboring cell, the signaling overhead is low, and the first SSB can also be determined according to the first index information, and the transmit power of the first signal can be determined based on the first SSB, and there is no need to repeatedly configure the information of the neighboring cell, which further reduces signaling overhead.

In addition, the bit of the cell indication information of the first SSB is only 1 bit, or whether the cell indication information is empty or not indicates whether the first SSB belongs to a serving cell or a neighboring cell, which further reduces signaling overhead.

In addition, the terminal can determine the first SSB from the SSBs of the neighboring cell according to the neighboring cell configuration information, and can uniformly configure the SSBs in the neighboring cell through the neighboring cell configuration information, and does not need to configure each SSB separately, thereby reducing signaling overhead.

FIG. 10 shows a flowchart of a method for determining an SSB provided by an exemplary embodiment of the present application. Referring to FIG. 10, the method includes the following steps.

In step 1010: the network device sends the third configuration information of the spatial relation information of the first signal to the terminal.

In step 1020: the terminal receives the spatial relation information of the first signal sent by the network device.

The spatial relation information of the first signal includes a reference signal used for determining a sending beam of the first signal and/or a power control parameter of the first signal. In addition, the third configuration information of the spatial relation information of the first signal further includes cell indication information and first index information of the first SSB.

Optionally, the first signal is an uplink signal, for example, the first signal is PUCCH or SRS.

Optionally, if the first signal is an SRS, the RRC signaling used for indicating the third configuration information may be:

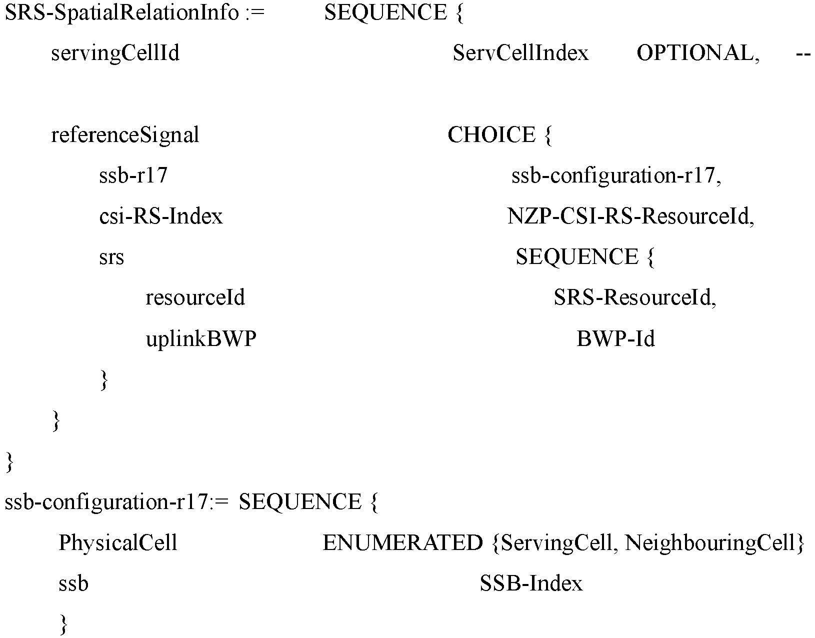

Among them, ssb-configuration-r17 is used to configure a parameter of the first SSB, including cell indication information PhysicalCell and first index information SSB-Index of the first SSB. A similar method may also be used for PUCCH.

In step 1030: the terminal determines the first SSB according to the cell indication information and the first index information in the third configuration information.

The process of step 1030 is similar to the process of the above-mentioned step 530, and details are not repeated here.

Optionally, when the cell indication information indicates that the first SSB is the SSB of a neighboring cell (that is, when PhysicalCell is configured), the terminal determines the physical resource (for example, time domain resource and frequency domain resource) and PCID of the SSB of the neighboring cell according to the neighboring cell configuration information, and determines the physical resource of the first SSB from the physical resources of the SSBs of the neighboring cell according to the first index information. Further, the terminal may perform detection of the first SSB according to the physical resource and the PCID of the first SSB.

In step 1040: the terminal uses the receiving beam for receiving the first SSB as the sending beam of the first signal.

After determining the receiving beam of the first SSB, the terminal can use the receiving beam of the first SSB as the sending beam of the first signal, and then send the first signal based on the sending beam.

In the method provided by the embodiments of the present application, whether the first SSB belongs to a serving cell or a neighboring cell can be indicated by the cell indication information in the configuration information of the spatial relation information of the first signal, the signaling overhead is low, and the first SSB can also be determined according to the first index information, and based on the first SSB, the sending beam of the first signal can be determined, and there is no need to repeatedly configure the information of the neighboring cell, which further reduces signaling overhead.

In addition, the bit of the cell indication information of the first SSB is only 1 bit, or whether the cell indication information is empty or not indicates whether the first SSB belongs to a serving cell or a neighboring cell, which further reduces signaling overhead.

In addition, the terminal can determine the first SSB from the SSBs of the neighboring cell according to the neighboring cell configuration information, and can uniformly configure the SSBs in the neighboring cell through the neighboring cell configuration information, and does not need to configure each SSB separately, thereby reducing signaling overhead.

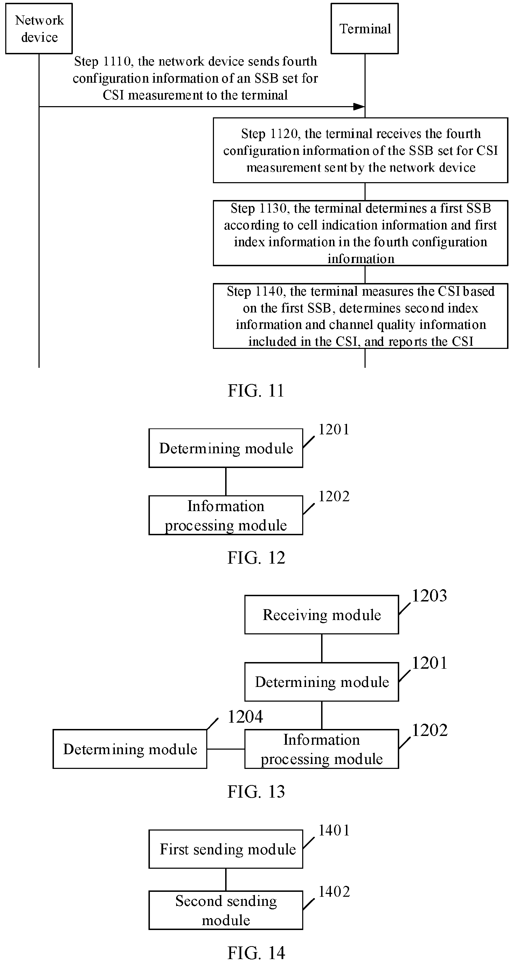

FIG. 11 shows a flowchart of a method for determining an SSB provided by an embodiment of the present application. Referring to FIG. 11, the method includes the following steps.

In step 1110: the network device sends the fourth configuration information of the SSB set used for CSI measurement to the terminal.

In step 1120: the terminal receives the fourth configuration information of the SSB set for CSI measurement sent by the network device.

The fourth configuration information includes cell indication information and first index information of the first SSB.

The network device configures the cell indication information for each SSB in the SSB set. Alternatively and optionally, the network device can configure one common cell indication information for the SSB set.

The network device sends the fourth configuration information of the SSB set for CSI measurement to the terminal through RRC signaling.

When the network device configures the cell indication information for each SSB in the SSB set, the RRC signaling used for indicating the fourth configuration information is:

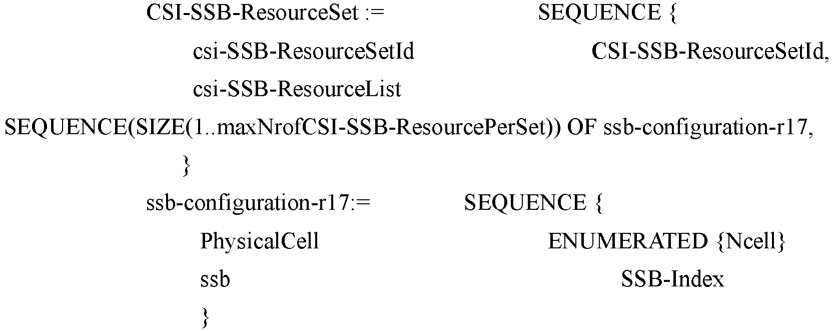

Among them, ssb-configuration-r17 is used to configure the parameter of the first SSB, including cell indication information PhysicalCell and first index information SSB-Index of the first SSB. When PhysicalCell is not configured, it indicates that the first SSB is the SSB of the serving cell; when PhysicalCell is configured, it indicates that the first SSB is the SSB of the neighboring cell.

Optionally, if the network device configures the common cell indication information for the SSB set, the RRC signaling used for indicating the fourth configuration information may be:

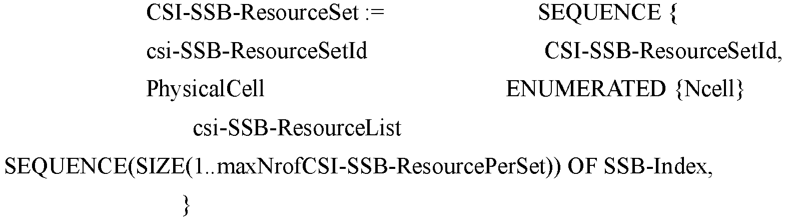

The configuration information (CSI-SSB-ResourceSet) of the SSB set includes cell indication information (PhysicalCell) and first index information (csi-SSB-ResourceList) of the first SSB, where the cell indication information is used for indicating all SSBs in the SSB set. The first index information csi-SSB-ResourceList is used for indicating a group of SSB indexes.

In step 1130: the terminal determines the first SSB according to the cell indication information and the first index information in the fourth configuration information.

The process of step 1130 is similar to the process of the above-mentioned step 530, and details are not repeated here.

In step 1140: the terminal measures the CSI based on the first SSB, determines the second index information and channel quality information included in the CSI, and reports the CSI.

The second index information is index information of the second SSB in the SSB set, and the channel quality information is RSRP information or SINR information corresponding to the second SSB.

Optionally, when the first SSB is the SSB set indicated by the fourth configuration information for CSI measurement, the terminal performs RSRP or SINR measurement on the SSBs in the first SSB set, and reports the SSB index and RSRP or SINR information of the SSB with the highest RSRP or SINR in the SSB set to the network device through CSI.

Optionally, the CSI further includes cell reporting information, where the cell reporting information is used for indicating that the second SSB belongs to the SSB of the serving cell or the SSB of the neighboring cell.

Optionally, the terminal receives the first SSB set and the second SSB set for CSI measurement sent by the network device. The first SSB set includes the SSBs of the serving cell, and the second SSB set includes the SSBs of the neighboring cell. In other words, the contents of the cell indication information in the two SSB set configurations are different. The terminal measures the SSBs in the first SSB set and the SSBs in the second SSB set, and reports the cell corresponding to the SSB with the highest RSRP or SINR (i.e., the cell reporting information), the SSB index of the SSB (i.e., the second index information) and RSRP (SINR) information (i.e., channel quality information) to the network device through CSI.

If the terminal determines the second SSB from the first SSB set or the second SSB set, the terminal can determine whether the second SSB belongs to the first SSB set or the second SSB set, and then can determine whether the second SSB is the SSB of the serving cell or the SSB of the neighboring cell.

In the method provided by the embodiments of the present application, the cell indication information in the configuration information of the SSB set used for CSI measurement can indicate whether the first SSB belongs to a serving cell or a neighboring cell, the signaling overhead is low, and the first SSB can be determined according to the index information, and the CSI reporting is performed based on the first SSB, and there is no need to repeatedly configure the information of the neighboring cell, which further reduces signaling overhead. Meanwhile, since one SSB set usually comes from the same physical cell, the overhead can be further reduced by configuring common cell indication information. Since there is only one neighboring cell in non-coherent transmission, only one common neighboring cell configuration information needs to be configured, so that the measurement and reporting of RSRP/SINR for the SSB of the neighboring cell can be supported with low signaling overhead, thereby supporting beam management of SSB of the neighboring cell.

FIG. 12 shows a block diagram of an apparatus for determining an SSB provided by an exemplary embodiment of the present application, and the apparatus includes:
a determining module 1201, configured to determine a first synchronization signal block (SSB) according to cell indication information of the first SSB and first index information of the first SSB;
an information processing module 1202, configured to determine a large-scale parameter, a beam or transmit power of a first signal according to the first SSB; or, perform CSI reporting based on the first SSB;
where the cell indication information is used for indicating whether the first SSB is an SSB of a serving cell or an SSB of a neighboring cell, and the first index information is used for indicating the first SSB.

Optionally, referring to FIG. 13, the apparatus further includes:
a receiving module 1203, configured to receive configuration information sent by a network device, where the configuration information includes the cell indication information and the first index information.

Optionally, the configuration information further includes:
first configuration information, where the first configuration information is configuration information of a transmission configuration indication (TCI) state of the first signal;
second configuration information, where the second configuration information is configuration information of a path loss measurement reference signal of the first signal;
third configuration information, where the third configuration information is spatial relation information of the first signal, and the spatial relation information includes a reference signal used for determining a sending beam of the first signal and/or a power control parameter of the first signal;
fourth configuration information, where the fourth configuration information is configuration information of an SSB set used for channel state information (CSI) measurement.

Optionally, the cell indication information includes 1 bit, if the cell indication information is a first preset value, the first SSB is the SSB of the serving cell, and if the cell indication information is a second preset value, the first SSB is the SSB of the neighboring cell; or,
if the cell indication information is empty, the first SSB the serving cell, and if the cell indication information is not empty, the first SSB is the neighboring cell; or,
if the cell indication information is empty, the first SSB is the neighboring cell, and if the cell indication information is not empty, the first SSB is the serving cell.

Optionally, the cell indication information indicates that the first SSB is the SSB of the neighboring cell, and the determining module 1201 is configured to determine the SSB of the neighboring cell according to the configuration information of the neighboring cell, where the configuration information of the neighboring cell is used for indicating the configuration information of the SSB of the neighboring cell;
the determining module 1201 is further configured to determine the first SSB from the SSBs of the neighboring cell according to the first index information.

Optionally, the neighboring cell configuration information includes at least one of a physical cell identifier (PCID), frequency domain resource information, time domain resource information, subcarrier interval information, and transmit power information of the SSB of the neighboring cell.

Optionally, the neighboring cell configuration information is a common configuration parameter in a carrier or bandwidth part (BWP).

Optionally, a physical resource of the first SSB does not overlap with physical resources of the second signal, and the second signal is a downlink signal configured or scheduled by the network device.

Optionally, the cell indication information indicates that the first SSB is the SSB of the serving cell, and the determining module 1201 is configured to determine the first SSB from the SSBs of the serving cell according to the first index information.

Optionally, referring to FIG. 13, the apparatus further includes:
a detection module 1204, configured to detect or measure the first SSB.

Optionally, the detection module 1204 is configured to detect or measure the first SSB if the first SSB is the SSB of the neighboring cell, and the physical resource of the first SSB does not overlap with the physical resource of a second signal, and the second signal is a downlink signal configured or scheduled by the network device.

Optionally, the detection module 1204 is configured to detect or measure the first SSB by using a receiving beam of the second signal if the first SSB is the SSB of the neighboring cell and the physical resource of the first SSB overlaps with the physical resource of a second signal, and the second signal is a downlink signal configured or scheduled by the network device.

Optionally, the first SSB is one SSB corresponding to the first index information; or,
the first SSB is one SSB set corresponding to the first index information and used for CSI measurement.

Optionally, the cell indication information and the first index information are included in the first configuration information of the TCI state of the first signal, and the information processing module 1202 is configured to:
use a large-scale parameter used for receiving the first SSB as the large-scale parameter for receiving the first signal; or,
use a receiving beam used for receiving the first SSB as the sending beam of the first signal; or,
use a receiving beam used for receiving the first SSB as the receiving beam of the first signal.

Optionally, the cell indication information and the first index information are included in the second configuration information of the path loss measurement reference signal of the first signal, and the information processing module 1202 is configured to:
determine a path loss estimation value based on the first SSB;
determine the transmit power of the first signal according to the path loss estimation value.

Optionally, the cell indication information and the first index information are included in the third configuration information of the spatial information of the first signal, and the information processing module 1202 is configured to:
use a receiving beam used for receiving the first SSB as the sending beam of the first signal.

Optionally, the cell indication information and the first index information are included in the fourth configuration information of the SSB set used for CSI measurement, and the information processing module 1202 is configured to:
measure the CSI based on the first SSB, determine the second index information and channel quality information included in the CSI, and report the CSI;
where the second index information is index information of the second SSB in the SSB set, and the channel quality information is RSRP information or SINR information corresponding to the second SSB.

Optionally, the CSI further includes cell reporting information, where the cell reporting information is used for indicating that the second SSB belongs to the SSB of the serving cell or the SSB of the neighboring cell.

Optionally, referring to FIG. 13, the information processing module 1202 is configured to:
receive a first SSB configured by the network device for CSI measurement, where the first SSB includes a first SSB set and a second SSB set, the first SSB set includes the SSBs of the serving cell, and the second SSB set includes the SSBs of the neighboring cell;

According to the measurement results of the SSBs in the first SSB set and the SSBs in the second SSB set, the cell reporting information, the second index information and the channel quality information included in the CSI are determined, so as to report the CSI.

FIG. 14 shows a block diagram of an apparatus for determining an SSB provided by an exemplary embodiment of the present application, and the apparatus includes:
a first sending module 1401, configured to send configuration information to a terminal, where the configuration information includes cell indication information of a first SSB and first index information of the first SSB; the cell indication information is used for indicating that the first SSB is an SSB of a serving cell or an SSB of a neighboring cell, and the first index information is used for indicating an SSB index of the first SSB;
a second sending module 1402, configured to send the first SSB to the terminal.

The terminal is configured to determine the first SSB according to the cell indication information and the first index information, and determine the large-scale parameter, beam or transmit power of the first signal according to the first SSB; or, perform CSI reporting based on the first SSB.

Optionally, the configuration information further includes:
first configuration information, where the first configuration information is configuration information of a transmission configuration indication (TCI) state of a first signal;
second configuration information, where the second configuration information is configuration information of a path loss measurement reference signal of the first signal;
third configuration information, where the third configuration information is spatial relation information of the first signal, and the spatial relation information includes a reference signal used for determining a sending beam of the first signal and/or a power control parameter of the first signal;
fourth configuration information, where the fourth configuration information is configuration information of an SSB set used for channel state information (CSI) measurement.

Optionally, the cell indication information includes 1 bit, if the cell indication information is a first preset value, the first SSB is the SSB of the serving cell, and if the cell indication information is a second preset value, the first SSB is the SSB of the neighboring cell; or,
if the cell indication information is empty, the first SSB is the serving cell, and if the cell indication information is not empty, the first SSB is the neighboring cell; or,
if the cell indication information is empty, the first SSB is the neighboring cell, and if the cell indication information is not empty, the first SSB is the serving cell.

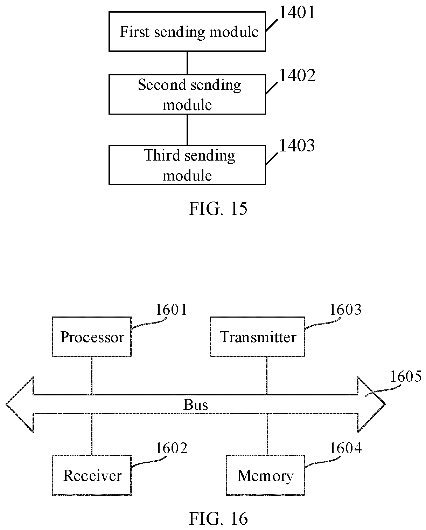

Optionally, referring to FIG. 15, the apparatus further includes:
a third sending module 1403, configured to send neighboring cell configuration information to the terminal, where the neighboring cell configuration information is used for indicating the configuration information of the SSB of the neighboring cell;
where the terminal is configured to determine the SSB of the neighboring cell according to the neighboring cell configuration information, and determine the first SSB from the SSBs of the neighboring cell according to the first index information.

Optionally, the neighboring cell configuration information includes at least one of the PCID, frequency domain resource information, time domain resource information, subcarrier interval information, and transmit power information of the SSB of the neighboring cell.

Optionally, the neighboring cell configuration information is a common configuration parameter in a carrier or bandwidth part (BWP).

Optionally, the first SSB is one SSB corresponding to the first index information; or,
the first SSB is one SSB set corresponding to the first index information and used for CSI measurement.

FIG. 16 shows a schematic structural diagram of a communication device provided by an exemplary embodiment of the present application. The communication device includes: a processor 1601, a receiver 1602, a transmitter 1603, a memory 1604 and a bus 1605.

The processor 1601 includes one or more processing cores, and the processor 1601 executes various functional applications and information processing by running software programs and modules.

The receiver 1602 and the transmitter 1603 may be implemented as one communication component, which may be one communication chip.

The memory 1604 is connected to the processor 1601 through the bus 1605.

The memory 1604 may be configured to store at least one instruction, and the processor 1601 may be configured to execute the at least one instruction to implement various steps in the above method embodiments.

Furthermore, the communication device may be a terminal or a network device. The memory 1604 may be implemented by any type or combination of volatile or non-volatile storage devices including, but not limited to: a magnetic or optical disk, an electrically erasable programmable read-only Memory (EEPROM), an Erasable Programmable Read Only Memory (EPROM), a Static Anytime Access Memory (SRAM), a Read Only Memory (ROM), a Magnetic Memory, a Flash Memory, a Programmable Read Only Memory (PROM).

In an exemplary embodiment, a computer-readable storage medium is also provided, and executable instructions are stored in the readable storage medium, and the executable instructions are loaded and executed by a processor to implement the above-mentioned method for determining an SSB performed by the communication device provided by various method embodiments.

Those of ordinary skill in the art can understand that all or part of the steps of implementing the above embodiments can be completed by hardware, or can be completed by instructing relevant hardware through a program, and the program can be stored in a computer-readable storage medium. The storage medium mentioned may be a read-only memory, a magnetic disk or an optical disk, etc.

## Claims

1. A method for determining a Synchronization Signal Block, SSB, applied to a terminal, the method comprising:
receiving (1120) a Radio Resource Control, RRC, signaling sent by a network device, wherein the RRC signaling comprises: Channel State Information Synchronization Signal Block, CSI-SSB, resource set information, CSI-SSB-ResourceSet, and the CSI-SSB resource set information comprises: an CSI-SSB resource set ID, CSI-SSB-ResourceSetId, and an CSI-SSB resource list, CSI-SSB-ResourceList; the method **characterized in that** the CSI-SSB resource list comprises a group of SSB indexes;
the CSI-SSB resource set information further comprises cell indication information corresponding to each SSB index in the CSI-SSB resource list , and the cell indication information is used for indicating whether an SSB corresponding to the SSB index is an SSB of a serving cell or an SSB of a neighboring cell.

2. The method according to claim 1, wherein the method further comprises:
determining (530) a first SSB according to cell indication information of the first SSB and first index information of the first SSB.

3. The method according to claim 2, wherein the method further comprises:
determining (540) a parameter of a first signal, or performing (540) reporting of CSI according to the first SSB.

4. The method according to claim 3, wherein the RRC signaling further comprises configuration information associated with the CSI-SSB resource list through the SSB index, and the configuration information is used for indicating whether an SSB associated with the configuration information through the SSB index is an SSB of the serving cell or an SSB of the neighboring cell.

5. The method according to claim 4, wherein the configuration information further comprises:
first configuration information, wherein the first configuration information is configuration information of a transmission configuration indication, TCI, state of the first signal;
second configuration information, wherein the second configuration information is configuration information of a path loss measurement reference signal of the first signal;
third configuration information, wherein the third configuration information is spatial relation information of the first signal, and the spatial relation information comprises a reference signal used for determining a sending beam of the first signal and/or a power control parameter of the first signal;
fourth configuration information, wherein the fourth configuration information is configuration information of an SSB set used for channel state information, CSI, measurement.

6. The method according to claim 2, wherein the cell indication information indicates that the first SSB is the SSB of the neighboring cell, wherein the method further comprises:
determining the SSB of the neighboring cell according to neighboring cell configuration information, wherein the neighboring cell configuration information is used for indicating configuration information of the SSB of the neighboring cell;
determining the first SSB from the SSBs of the neighboring cell according to the first index information.

7. The method according to claim 6, wherein the neighboring cell configuration information comprises at least one of a physical cell identifier, PCID, frequency domain resource information, time domain resource information, subcarrier spacing information, and transmit power information of the SSB of the neighboring cell.

8. The method according to any one of claims 2 to 7, wherein
the first SSB is one SSB corresponding to the first index information; or,
the first SSB is one SSB set corresponding to the first index information and used for CSI measurement.

9. The method according to claim 5, wherein the cell indication information and the first index information are comprised in the first configuration information of the TCI state of the first signal, and the determining (540) the parameter of the first signal according to the first SSB, comprises:
using a large-scale parameter used for receiving the first SSB as the large-scale parameter for receiving the first signal; or,
using a receiving beam used for receiving the first SSB as the sending beam of the first signal; or,
using the receiving beam used for receiving the first SSB as the receiving beam of the first signal.

10. The method according to claim 5, wherein the cell indication information and the first index information are comprised in the second configuration information of the path loss measurement reference signal of the first signal, and the determining (540) the parameter of the first signal according to the first SSB, comprises:
determining (940) a path loss estimation value based on the first SSB;
determining (940) the transmit power of the first signal according to the path loss estimation value.

11. The method according to claim 5, wherein the cell indication information and the first index information are comprised in the third configuration information of the spatial relation information of the first signal, and the determining (540) the parameter of the first signal according to the first SSB, comprises:
using (1040) a receiving beam used for receiving the first SSB as the sending beam of the first signal.

12. The method according to claim 5, wherein the cell indication information and the first index information are comprised in the fourth configuration information of the SSB set used for CSI measurement, and the performing (540) reporting of CSI according to the first SSB, comprises:
performing (1140) measurement of CSI based on the first SSB, determining (1140) second index information and channel quality information comprised in the CSI, and reporting the CSI;
wherein the second index information is index information of a second SSB in the SSB set, and the channel quality information is reference signal received power, RSRP, information or signal to interference plus noise ratio (SINR) information corresponding to the second SSB.

13. A method for determining an SSB, applied to a network device, the method comprising:
sending (1110) an RRC signaling, wherein the RRC signaling comprises: CSI-SSB resource set information, CSI-SSB-ResourceSet, and the CSI-SSB resource set information comprises: an CSI-SSB resource set ID, CSI-SSB-ResourceSetId, and an CSI-SSB resource list, CSI-SSB-ResourceList; the method **characterized in that** the CSI-SSB resource list comprises a group of SSB indexes; the CSI-SSB resource set information further comprises cell indication information corresponding to each SSB index in the CSI-SSB resource list, and the cell indication information is used for indicating whether an SSB corresponding to the SSB index is an SSB of a serving cell or an SSB of a neighboring cell.

14. The method according to claim 13, wherein the method further comprises:
sending a first SSB to the terminal;
wherein the cell indication information is used for indicating whether the first SSB is an SSB of a serving cell or an SSB of a neighboring cell.

15. An apparatus, **characterized by** comprising:
a processor (1601);
a transceiver (1602, 1603) connected to the processor (1601);
a memory (1604) for storing executable instructions for the processor (1601);
wherein the processor (1601) is configured to load and execute the executable instructions to implement the method for determining an SSB according to any one of claims 1 to 12, or according to any one of claims 13 to 14.

## Patentansprüche

1. Verfahren zum Bestimmen eines Synchronisationssignalblocks, SSB, das auf ein Endgerät angewendet wird, wobei das Verfahren Folgendes umfasst:
Empfangen (1120) einer Funkressourcensteuerungs-, RRC, Signalgebung, die durch eine Netzwerkvorrichtung gesendet wird, wobei die RRC-Signalgebung Folgendes umfasst: Kanalzustandsinformations-Synchronisationssignalblock-, CSI-SSB, Ressourcensatzinformationen, CSI-SSB-ResourceSet, und wobei die CSI-SSB-Ressourcensatzinformationen Folgendes umfassen: eine CSI-SSB-Ressourcensatz-ID, CSI-SSB-ResourceSetId, und eine CSI-SSB-Ressourcenliste, CSI-SSB-ResourceList; wobei das Verfahren **dadurch gekennzeichnet ist, dass** die CSI-SSB-Ressourcenliste eine Gruppe von SSB-Indizes umfasst;
wobei die CSI-SSB-Ressourcensatzinformationen ferner Zellenanzeigeinformationen umfassen, die jedem SSB-Index in der CSI-SSB-Ressourcenliste entsprechen, und wobei die Zellenanzeigeinformationen zum Anzeigen, ob ein dem SSB-Index entsprechender SSB ein SSB einer bedienenden Zelle oder ein SSB einer Nachbarzelle ist, verwendet werden.

2. Verfahren nach Anspruch 1, wobei das Verfahren ferner Folgendes umfasst:
Bestimmen (530) eines ersten SSB gemäß Zellenanzeigeinformationen des ersten SSB und ersten Indexinformationen des ersten SSB.

3. Verfahren nach Anspruch 2, wobei das Verfahren ferner Folgendes umfasst:
Bestimmen (540) eines Parameters eines ersten Signals, oder Durchführen (540) eines Berichtens von CSI gemäß dem ersten SSB.

4. Verfahren nach Anspruch 3, wobei die RRC-Signalgebung ferner Konfigurationsinformationen umfasst, die über den SSB-Index mit der CSI-SSB-Ressourcenliste assoziiert sind, und wobei die Konfigurationsinformationen zum Anzeigen, ob ein durch den SSB-Index mit den Konfigurationsinformationen assoziierter SSB ein SSB der bedienenden Zelle oder ein SSB der Nachbarzelle ist, verwendet werden.

5. Verfahren nach Anspruch 4, wobei die Konfigurationsinformationen ferner Folgendes umfassen:
erste Konfigurationsinformationen, wobei die ersten Konfigurationsinformationen Konfigurationsinformationen eines Übertragungskonfigurationsanzeige-, TCI, Zustands des ersten Signals sind;
zweite Konfigurationsinformationen, wobei die zweiten Konfigurationsinformationen Konfigurationsinformationen eines Pfadverlustmessungs-Referenzsignals des ersten Signals sind;
dritte Konfigurationsinformationen, wobei die dritten Konfigurationsinformationen räumliche Beziehungsinformationen des ersten Signals sind, und wobei die räumlichen Beziehungsinformationen ein Referenzsignal umfassen, das zum Bestimmen eines Sendestrahls des ersten Signals und/oder eines Leistungssteuerungsparameters des ersten Signals verwendet wird;
vierte Konfigurationsinformationen, wobei die vierten Konfigurationsinformationen Konfigurationsinformationen eines SSB-Satzes sind, der zur Kanalzustandsinformations-, CSI, Messung verwendet wird.

6. Verfahren nach Anspruch 2, wobei die Zellenanzeigeinformationen anzeigen, dass der erste SSB der SSB der Nachbarzelle ist, wobei das Verfahren ferner Folgendes umfasst:
Bestimmen des SSB der Nachbarzelle gemäß Nachbarzellenkonfigurationsinformationen, wobei die Nachbarzellenkonfigurationsinformationen zum Anzeigen von Konfigurationsinformationen des SSB der Nachbarzelle verwendet werden;
Bestimmen des ersten SSB aus den SSBs der Nachbarzelle gemäß den ersten Indexinformationen.

7. Verfahren nach Anspruch 6, wobei die Nachbarzellenkonfigurationsinformationen mindestens eines von einer physischen Zellkennung, PCID, Frequenzbereichsressourceninformationen, Zeitbereichsressourceninformationen, Unterträgerabstandsinformationen und Übertragungsleistungsinformationen des SSB der Nachbarzelle umfassen.

8. Verfahren nach einem der Ansprüche 2 bis 7, wobei
der erste SSB ein SSB ist, der den ersten Indexinformationen entspricht; oder
der erste SSB ein SSB-Satz ist, der den ersten Indexinformationen entspricht und zur CSI-Messung verwendet wird.

9. Verfahren nach Anspruch 5, wobei die Zellenanzeigeinformationen und die ersten Indexinformationen in den ersten Konfigurationsinformationen des TCI-Zustands des ersten Signals enthalten sind, und wobei das Bestimmen (540) des Parameters des ersten Signals gemäß dem ersten SSB Folgendes umfasst:
Verwenden eines großskaligen Parameters, der zum Empfangen des ersten SSB verwendet wird, als den großskaligen Parameter zum Empfangen des ersten Signals; oder
Verwenden eines Empfangsstrahls, der zum Empfangen des ersten SSB verwendet wird, als den Sendestrahl des ersten Signals; oder
Verwenden des Empfangsstrahls, der zum Empfangen des ersten SSB verwendet wird, als den Empfangsstrahl des ersten Signals.

10. Verfahren nach Anspruch 5, wobei die Zellenanzeigeinformationen und die ersten Indexinformationen in den zweiten Konfigurationsinformationen des Pfadverlustmessungs-Referenzsignals des ersten Signals enthalten sind, und wobei das Bestimmen (540) des Parameters des ersten Signals gemäß dem ersten SSB Folgendes umfasst:
Bestimmen (940) eines Pfadverlustschätzwerts basierend auf dem ersten SSB;
Bestimmen (940) der Übertragungsleistung des ersten Signals gemäß dem Pfadverlustschätzwert.

11. Verfahren nach Anspruch 5, wobei die Zellenanzeigeinformationen und die ersten Indexinformationen in den dritten Konfigurationsinformationen der räumlichen Beziehungsinformationen des ersten Signals enthalten sind, und wobei das Bestimmen (540) des Parameters des ersten Signals gemäß dem ersten SSB Folgendes umfasst:
Verwenden (1040) eines Empfangsstrahls, der zum Empfangen des ersten SSB verwendet wird, als den Sendestrahl des ersten Signals.

12. Verfahren nach Anspruch 5, wobei die Zellenanzeigeinformationen und die ersten Indexinformationen in den vierten Konfigurationsinformationen des zur CSI-Messung verwendeten SSB-Satzes enthalten sind, und wobei das Durchführen (540) eines Berichtens von CSI gemäß dem ersten SSB Folgendes umfasst:
Durchführen (1140) einer Messung von CSI basierend auf dem ersten SSB, Bestimmen (1140) von zweiten Indexinformationen und Kanalqualitätsinformationen, die in den CSI enthalten sind, und Berichten der CSI;
wobei die zweiten Indexinformationen Indexinformationen eines zweiten SSB in dem SSB-Satz sind, und wobei die Kanalqualitätsinformationen Referenzsignal-der-Empfangsfeldstärke-, RSRP, Informationen oder Signal-zu-Interferenz-plus-RauschVerhältnis(SINR)-Informationen sind, die dem zweiten SSB entsprechen.

13. Verfahren zum Bestimmen eines SSB, das auf eine Netzwerkvorrichtung angewendet wird, wobei das Verfahren Folgendes umfasst:
Senden (1110) einer RRC-Signalgebung, wobei die RRC-Signalgebung Folgendes umfasst: CSI-SSB-Ressourcensatzinformationen, CSI-SSB-ResourceSet, und wobei die CSI-SSB-Ressourcensatzinformationen Folgendes umfassen: eine CSI-SSB-Ressourcensatz-ID, CSI-SSB-ResourceSetId, und eine CSI-SSB-Ressourcenliste, CSI-SSB-ResourceList; wobei das Verfahren **dadurch gekennzeichnet ist, dass**
die CSI-SSB-Ressourcenliste eine Gruppe von SSB-Indizes umfasst; wobei die CSI-SSB-Ressourcensatzinformationen ferner Zellenanzeigeinformationen umfassen, die jedem SSB-Index in der CSI-SSB-Ressourcenliste entsprechen, und wobei die Zellenanzeigeinformationen zum Anzeigen, ob ein dem SSB-Index entsprechender SSB ein SSB einer bedienenden Zelle oder ein SSB einer Nachbarzelle ist, verwendet werden.

14. Verfahren nach Anspruch 13, wobei das Verfahren ferner Folgendes umfasst:
Senden eines ersten SSB an das Endgerät;
wobei die Zellenanzeigeinformationen zum Anzeigen, ob der erste SSB ein SSB einer bedienenden Zelle oder ein SSB einer Nachbarzelle ist, verwendet werden.

15. Einrichtung, **dadurch gekennzeichnet, dass** sie Folgendes umfasst:
einen Prozessor (1601);
einen Sendeempfänger (1602, 1603), der mit dem Prozessor (1601) verbunden ist;
einen Speicher (1604) zum Speichern ausführbarer Anweisungen für den Prozessor (1601);
wobei der Prozessor (1601) dazu konfiguriert ist, die ausführbaren Anweisungen zu laden und auszuführen, um das Verfahren zum Bestimmen eines SSB nach einem der Ansprüche 1 bis 12 oder nach einem der Ansprüche 13 bis 14 zu implementieren.

## Revendications

1. Procédé pour déterminer un bloc de signal de synchronisation, SSB, appliqué à un terminal, le procédé comprenant les étapes suivantes :
recevoir (1120) un signal de contrôle des ressources radio, RRC, envoyé par un dispositif de réseau, dans lequel le signal RRC comprend : des informations d'ensemble de ressources de bloc de signal de synchronisation d'informations d'état de canal, CSI-SSB, CSI-SSB-ResourceSet, et les informations d'ensemble de ressources CSI-SSB comprennent : un identifiant d'ensemble de ressources CSI-SSB, CSI-SSB-ResourceSetId, et une liste de ressources CSI-SSB, CSI-SSB-ResourceList ;
le procédé étant **caractérisé en ce que** la liste de ressources CSI-SSB comprend un groupe d'index SSB ;
les informations d'ensemble de ressources CSI-SSB comprenant en outre des informations d'indication de cellule correspondant à chaque index SSB dans la liste de ressources CSI-SSB, et les informations d'indication de cellule étant utilisées pour indiquer si un SSB correspondant à l'index SSB est un SSB d'une cellule de desserte ou un SSB d'une cellule voisine.

2. Procédé selon la revendication 1, dans lequel le procédé comprend en outre l'étape suivante :
déterminer (530) un premier SSB en fonction des informations d'indication de cellule du premier SSB et des premières informations d'index du premier SSB.

3. Procédé selon la revendication 2, dans lequel le procédé comprend en outre l'étape suivante :
déterminer (540) un paramètre d'un premier signal, ou effectuer (540) un rapport de CSI en fonction du premier SSB.

4. Procédé selon la revendication 3, dans lequel la signalisation RRC comprend en outre des informations de configuration associées à la liste de ressources CSI-SSB par l'intermédiaire de l'index SSB, et les informations de configuration sont utilisées pour indiquer si un SSB associé aux informations de configuration par l'intermédiaire de l'index SSB est un SSB de la cellule de desserte ou un SSB de la cellule voisine.

5. Procédé selon la revendication 4, dans lequel les informations de configuration comprennent en outre :
des premières informations de configuration, les premières informations de configuration étant des informations de configuration d'un état d'indication de configuration de transmission, TCI, du premier signal ;
des deuxièmes informations de configuration, les deuxièmes informations de configuration étant des informations de configuration d'un signal de référence de mesure d'affaiblissement de propagation du premier signal ;
des troisièmes informations de configuration, les troisièmes informations de configuration étant des informations de relation spatiale du premier signal, et les informations de relation spatiale comprenant un signal de référence utilisé pour déterminer un faisceau d'émission du premier signal et/ou un paramètre de contrôle de puissance du premier signal ;
des quatrièmes informations de configuration, les quatrièmes informations de configuration étant des informations de configuration d'un ensemble SSB utilisé pour la mesure des informations d'état de canal, CSI.

6. Procédé selon la revendication 2, dans lequel les informations d'indication de cellule indiquent que le premier SSB est le SSB de la cellule voisine, le procédé comprenant en outre les étapes suivantes :
déterminer le SSB de la cellule voisine en fonction des informations de configuration de la cellule voisine, les informations de configuration de la cellule voisine étant utilisées pour indiquer des informations de configuration du SSB de la cellule voisine ;
déterminer le premier SSB à partir des SSB de la cellule voisine en fonction des premières informations d'index.

7. Procédé selon la revendication 6, dans lequel les informations de configuration de la cellule voisine comprennent au moins une information parmi les suivantes : un identifiant de cellule physique, PCID, des informations de ressources du domaine fréquentiel, des informations de ressources du domaine temporel, des informations d'espacement des sous-porteuses et des informations de puissance d'émission du SSB de la cellule voisine.

8. Procédé selon l'une quelconque des revendications 2 à 7, dans lequel :
le premier SSB est un SSB correspondant aux premières informations d'index ; ou
le premier SSB est un ensemble de SSB correspondant aux premières informations d'index et utilisé pour la mesure des CSI.

9. Procédé selon la revendication 5, dans lequel les informations d'indication de cellule et les premières informations d'index sont comprises dans les premières informations de configuration de l'état TCI du premier signal, et la détermination (540) du paramètre du premier signal selon le premier SSB, comprend les étapes suivantes :
utiliser un paramètre à grande échelle utilisé pour la réception du premier SSB en tant que paramètre à grande échelle pour la réception du premier signal ; ou
utiliser un faisceau de réception utilisé pour la réception du premier SSB en tant que faisceau d'émission du premier signal ; ou
utiliser le faisceau de réception utilisé pour la réception du premier SSB en tant que faisceau de réception du premier signal.

10. Procédé selon la revendication 5, dans lequel les informations d'indication de cellule et les premières informations d'index sont comprises dans les deuxièmes informations de configuration du signal de référence de mesure d'affaiblissement de propagation du premier signal, et la détermination (540) du paramètre du premier signal selon le premier SSB, comprend les étapes suivantes :
déterminer (940) une valeur d'estimation d'affaiblissement de propagation sur la base du premier SSB ;
déterminer (940) la puissance d'émission du premier signal en fonction de la valeur d'estimation d'affaiblissement de propagation.

11. Procédé selon la revendication 5, dans lequel les informations d'indication de cellule et les premières informations d'index sont comprises dans les troisièmes informations de configuration des informations de relation spatiale du premier signal, et la détermination (540) du paramètre du premier signal selon le premier SSB, comprend :
d'utiliser (1040) un faisceau de réception utilisé pour recevoir le premier SSB comme faisceau d'émission du premier signal.

12. Procédé selon la revendication 5, dans lequel les informations d'indication de cellule et les premières informations d'index sont comprises dans les quatrièmes informations de configuration de l'ensemble SSB utilisé pour la mesure des CSI, et l'exécution (540) du rapport des CSI selon le premier SSB, comprend les étapes suivantes :
effectuer (1140) une mesure des CSI sur la base du premier SSB, déterminer (1140) les deuxièmes informations d'index et les informations de qualité de canal comprises dans les CSI, et rapporter les CSI ;
dans lequel les deuxièmes informations d'index sont des informations d'index d'un deuxième SSB dans l'ensemble SSB, et les informations de qualité de canal sont des informations de puissance de réception de signal de référence, RSRP, ou des informations de rapport signal sur interférence plus bruit, SINR, correspondant au deuxième SSB.

13. Procédé de détermination d'un SSB, appliqué à un dispositif de réseau, le procédé comprenant les étapes suivantes :
envoyer (1110) une signalisation RRC, la signalisation RRC comprenant : des informations d'ensemble de ressources CSI-SSB, CSI-SSB-ResourceSet, et les informations d'ensemble de ressources CSI-SSB comprennent : un identifiant d'ensemble de ressources CSI-SSB, CSI-SSB-ResourceSetId, et une liste de ressources CSI-SSB, CSI-SSB-ResourceList ;
le procédé étant **caractérisé en ce que** la liste de ressources CSI-SSB comprend un groupe d'index SSB ; les informations d'ensemble de ressources CSI-SSB comprenant en outre des informations d'indication de cellule correspondant à chaque index SSB dans la liste de ressources CSI-SSB, et les informations d'indication de cellule étant utilisées pour indiquer si un SSB correspondant à l'index SSB est un SSB d'une cellule de desserte ou un SSB d'une cellule voisine.

14. Procédé selon la revendication 13, dans lequel le procédé comprend en outre :
d'envoyer un premier SSB au terminal ;
les informations d'indication de cellule étant utilisées pour indiquer si le premier SSB est un SSB d'une cellule de desserte ou un SSB d'une cellule voisine.

15. Appareil **caractérisé en ce qu'**il comprend :
un processeur (1601) ;
un émetteur-récepteur (1602, 1603) connecté au processeur (1601) ;
une mémoire (1604) pour stocker des instructions exécutables pour le processeur (1601) ;
le processeur (1601) étant configuré pour charger et exécuter les instructions exécutables pour mettre en œuvre le procédé de détermination d'un SSB selon l'une quelconque des revendications 1 à 12, ou selon l'une quelconque des revendications 13 à 14.
